# EUROPEAN PATENT SPECIFICATION

(11) **EP 4 545 345 B1**
(45) Date of publication and mention of the grant of the patent: **22.07.2026**
(21) Application number: 23383099.1
(22) Date of filing: 27.10.2023
(51) Int. Cl.: B60L 50/53, B60L 53/20, B60L 9/04, B60L 50/51, B60L 3/00

(54) **POWER SUPPLY SYSTEM FOR A RAILWAY VEHICLE**
STROMVERSORGUNGSSYSTEM FÜR EIN SCHIENENFAHRZEUG
SYSTÈME D'ALIMENTATION ÉLECTRIQUE POUR UN VÉHICULE FERROVIAIRE

(43) Date of publication of application: 30.04.2025
(73) Proprietor: Ingeteam Power Technology, S.A., 48170 Zamudio (Bizkaia) (ES)
(72) Inventor: LARRAZABAL BENGOECHEA, Igor, 48170 ZAMUDIO (ES); ORTEGA RODRIGUEZ, David, 48170 ZAMUDIO (ES)
(74) Representative: Galbaian S.Coop.

(56) References cited:
- EP-B1- 2 586 646
- JP-A- 2009 072 003

## Description

### TECHNICAL FIELD

The present invention relates to a power supply system for a railway vehicle, in particular for a railway vehicle that uses at least one electric battery to be driven.

### PRIOR ART

There are known railway vehicles that use electric batteries as an auxiliary power source for the traction motors of these vehicles, which serve as a back-up or as an alternative at specific times to a main power source that uses fossil fuel as a raw material (usually diesel engines). This type of railway vehicle is known as DEMU (Diesel Electric Multiple Units).

There are also known railway vehicles that dispense with fossil fuel power sources, with electric batteries also being used as the main power source for the traction motors of these vehicles. Such railway vehicles are known as BEMUs (Battery Electric Multiple Units). Generally speaking, these vehicles are designed to be connected to a catenary, so that the traction motors can be powered both by energy obtained from the catenary and from the electric batteries. These electric batteries are rechargeable and can be recharged for example with energy from the catenary or even with energy left over from the braking of the vehicles. In addition to being able to be connected to a catenary, it is also possible to find railway vehicles that also include a fossil fuel power supply.

EP3878680A2 discloses a BEMU with a power supply system comprising a connection for connecting to an AC catenary to provide AC electrical power from the AC catenary to the railway vehicle; an AC-DC converter for converting the AC electrical power to DC electrical power for a DC bus of the power supply system; and an inverter for converting the DC electrical power from the DC bus to AC electrical power for powering at least one traction motor of the vehicle. The power system further comprises a rechargeable electric battery connected to the DC bus.

EP2586646A2 discloses an electrical power supply arrangement for drive devices, for operating a rail vehicle on electric power supply networks. The arrangement is adapted for being connected to an AC voltage network and also to a DC voltage network.

JP2009072003A discloses an electric railway system in which an in-vehicle battery is charged by power feeding from an overhead wire. A converter is controlled to maintain the current for charging the battery constant, The primary voltage of a converter being stepped up or down to get said aim.

### DISCLOSURE OF THE INVENTION

The object of the invention is to provide a power supply system for a railway vehicle, as defined in the claims.

The power supply system comprises a connection point for being connected to a catenary; a DC bus; a traction inverter connected to the DC bus and configured to convert DC electrical power from the DC bus to AC three-phase power to electrically supply at least one traction motor of the railway vehicle; and a traction battery connected to the DC bus.

The power supply system is configured to be connected to a DC catenary that provides a DC voltage with a determined maximum value through the connection point. The power supply system further comprises a DC-DC converter connected between the connection point and the DC bus, which is unidirectional and which is configured to boost the DC voltage from the catenary to a value higher than the value of the DC voltage provided by the catenary.

A DC catenary is adapted to provide a given nominal DC voltage fluctuating between a given minimum and a given maximum permissible value, in normal operating conditions, but this DC voltage may have voltage peaks exceeding the given maximum value (an effect known as overvoltage). The DC-DC converter is configured to, in use, raise the DC voltage coming from the catenary to a value equal to or above said given maximum value, the power supply system comprising a control unit configured to, in use, cause the DC-DC converter to raise the DC voltage from the catenary at all times.

Due to the ability of the DC-DC converter to boost the voltage it receives, when there is an overvoltage in the catenary, the DC-DC converter is prepared (configured) to absorb the overvoltage and the power supply system does not require specific protection components to be protected against said overvoltage, resulting in a smaller and therefore lighter power supply system.

In addition, the higher voltage provided by the DC-DC converter is also positive when interacting with the battery, as it gives better control over the battery charging current. When the battery needs to be charged from the catenary, the starting voltage is higher than in the state of the art and this allows for a lower charging current for the same battery charging power, with less influence on the negative performance of the battery.

These and other advantages and features of the invention will become apparent in view of the figures and the detailed description of the invention.

### DESCRIPTION OF THE DRAWINGS

Figure 1 shows schematically a railway vehicle with a power supply system according to the invention.
Figure 2 shows schematically an embodiment of a power supply system according to the invention, connected to two traction motors of a railway vehicle.
Figure 3 shows schematically a two-branch DC-DC converter of the power supply system in Figure 2.
Figure 4 shows schematically a first converter with two isolation blocks of two power supply branches of the power supply system of figure 2.
Figure 5 shows schematically a second converter of an isolation block of the power supply system of figure 2.

### DETAILED DISCLOSURE OF THE INVENTION

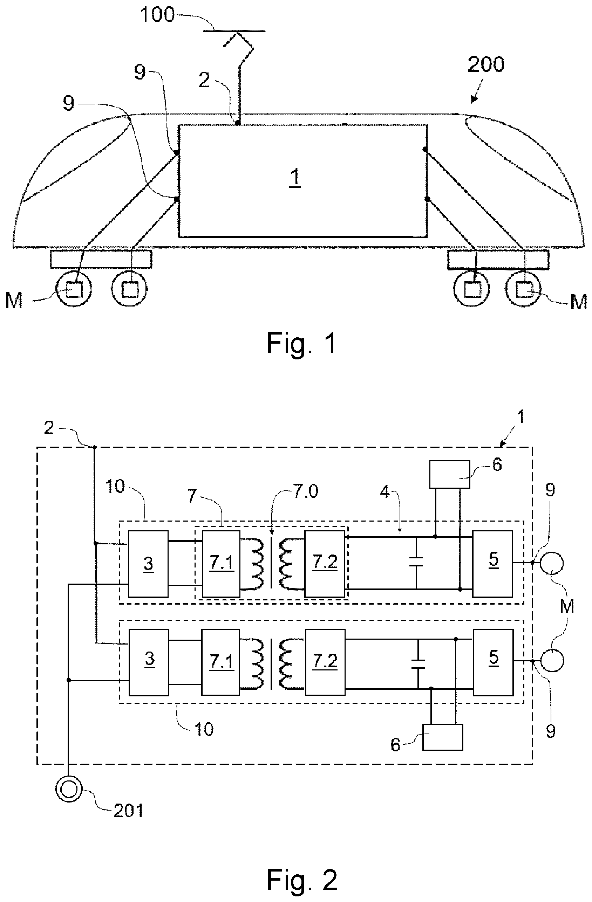

The proposed power supply system 1 is adapted for a railway vehicle 200 as depicted by way of example and in a simplified form in Figure 1. The power supply system 1 is adapted for being connected to at least one DC catenary 100 from which a DC electrical voltage is obtained to power and drive the railway vehicle 200, and comprises a connection point 2 for said connection, said power supply system 1 being connectable to the DC catenary 100 through the connection point 2. A catenary 100 provides an electrical DC voltage that can fluctuate between a determined minimum value and a determined maximum value, in normal operating conditions. The determined maximum value and the determined minimum value depend on the regulations of each territory, so the DC voltage range provided by the catenary 100 depends on the territory where the catenary 100 is located (and in which territory the railway vehicle 200 is running).

There are different DC 100 catenaries 100 that offer different rated DC voltages, and each of these catenaries 100 can reach a certain maximum voltage value higher than the rated voltage value (the determined maximum value). To give two examples, there are catenaries 100 of 1.5kV that can reach maximum voltages up to 2kV (depending on the territory where they are installed), and catenaries 100 of 3kV that can reach maximum voltages up to 4kV (depending on the territory where they are installed).

Thus, when a railway vehicle 200 is connected to a DC catenary 100 through the connection point 2 of the power supply system 1, said railway vehicle 200 can be supplied with electrical power from said catenary 100 to generate the traction for its movement, said power supply system 1 being able to receive a voltage from said catenary 100 that fluctuates between a maximum and a minimum value in accordance with the regulations corresponding to the territory where said catenary 100 is installed (and through which said railway vehicle 200 circulates).

The power supply system 1 further comprises at least one DC bus 4 associated with the connection point 2; a traction inverter 5 connected to the DC bus 4 and configured to convert a DC electrical power from said DC bus 4 into AC three-phase power and to connect to at least one traction motor M of the railway vehicle 200 to supply said traction motor M, said traction motor M being in charge of driving the railway vehicle 200 (driving at least one wheel 201 of said railway vehicle 200). The power supply system 1 thus comprises a connection 9 adapted to be connected to a traction motor M, the traction inverter 5 being connected to the traction motor M via said connection 9.

The power supply system 1 further comprises a traction battery 6 connected to the DC bus 4. Connecting the battery 6 directly to the DC bus 4 allows for higher energy efficiency in the power supply system 1, since compared to some prior art solutions in which a battery is connected to the DC bus via a DC-DC converter, fewer conversion stages are required (only that of the traction inverter 5). Preferably, the power supply system 1 comprises a traction inverter 5 and a DC bus 4 associated to the connection point 2 for each traction motor M, as depicted in Figure 2, and preferably, in addition, the power supply system 1 comprises a respective battery 6 connected to each of the DC buses 4.

Under normal circumstances, when there is no anomaly in the catenary 100, the catenary 100 provides a nominal voltage whose value may fluctuate between a determined minimum value and a determined maximum value, as described above. However, the catenary 100 may provide a voltage with a value higher than said maximum value in abnormal situations. This overvoltage can damage at least the power supply system which is connected to the catenary 100, so that known power supply systems comprise specific protection components to absorb the excess electrical power reaching the said power supply system caused by the overvoltage of the catenary 100.

The proposed power supply system 1 further comprises a DC - DC converter 3 which is connected between the connection point 2 and the DC bus 4. Preferably the power supply system 1 comprises one DC - DC converter 3 per traction motor M, as depicted in Figure 2. The DC-DC converter 3 is designed as a boost converter, to boost the DC voltage coming from the catenary 100, such that, in use, at the output of the DC-DC converter 3 there is a DC voltage with a higher value than the value of the DC voltage provided by the catenary 100.

This aspect gives the DC-DC converter 3 the ability to operate even when the voltage of the catenary 100 exceeds its determined maximum voltage value, in such a way that the proposed power supply system 1 is already adapted to withstand overvoltage of the catenary 100 without the need to use additional specific protection components for this purpose, contrary to the state of the art where it is necessary to use such additional specific protection components, since in said power supply system 1 it is no longer necessary to buffer the input voltage to said DC-DC converter 3 (which is able to withstand such overvoltage).

The DC - DC converter 3 is further configured to, in use, raise the DC voltage coming from the catenary 100 to a value equal to or above the determined maximum value of the voltage of the catenary 100 (above the maximum voltage value determined by the relevant regulations), regardless of the value of the voltage provided by the catenary 100 (at least when providing a DC voltage with a value within the range between the determined minimum value and the determined maximum value). For example, if the catenary 100 is a 1.5kV catenary and the determined maximum value in that territory for the catenary 100 is 2kV, the DC-DC converter 3 raises the voltage received from the catenary 100 above 2kV, whatever the value of that received voltage, and if catenary 100 is a 3kV catenary and the determined maximum value in that territory for catenary 100 is 4kV, the DC-DC converter 3 raises the voltage from catenary 100 above 4kV, whatever the value of that received voltage is.

Thanks to the use of the battery 6, which can provide electrical power to the traction inverter 5, the DC-DC converter 3 does not need to provide 100% of the electrical power required to drive the railway vehicle 200 and can be sized to provide less electrical power than that required by the railway vehicle 200 to be driven, thus reducing its cost and size. The sizing of both the battery 6 and the DC-DC converter 3 will depend on the requirements for each case, the more the battery 6 has to provide, the more it will be larger and the smaller the DC-DC converter 3 will be.

In addition, the use of the battery 6 allows possible electrical power that would otherwise be fed back into the catenary 100 to remain in the power supply system 1 (by charging the battery 6 for example), making the DC-DC converter 3 unidirectional and therefore requiring fewer components, less complexity and even smaller size.

The power supply system 1 comprises a control unit 8 adapted to control at least the DC-DC converter 3, and preferably also other converters of the power supply system 1, such as the traction inverter 5. The control unit 8 is configured to cause the DC-DC converter 3, in use and when the connection point 2 is connected to the DC catenary 100, to raise the DC voltage coming from the catenary 100 at all times during normal operating conditions. In particular, the control unit 8 is configured to control the DC-DC converter 3 so that the output voltage of the DC-DC converter 3 is equal to or higher than the corresponding determined maximum value of the catenary 100, independently of the value of the DC voltage coming from the catenary 100 when said DC voltage is within its normal operating range.

In this way, the conversion stage of the power supply system 1 downstream of the DC-DC converter 3 always has a high DC voltage at its input during normal operating conditions, and it requires less current and therefore fewer, or at least smaller, components to provide the same electrical power.

The control unit 8 is further configured so that the DC-DC converter 3 raises the DC voltage coming from the catenary 100 when the battery 6 is required to be charged from the catenary 100, thereby raising the charging current of the battery 6 in a controlled manner and having control over the charging current of the battery 6.

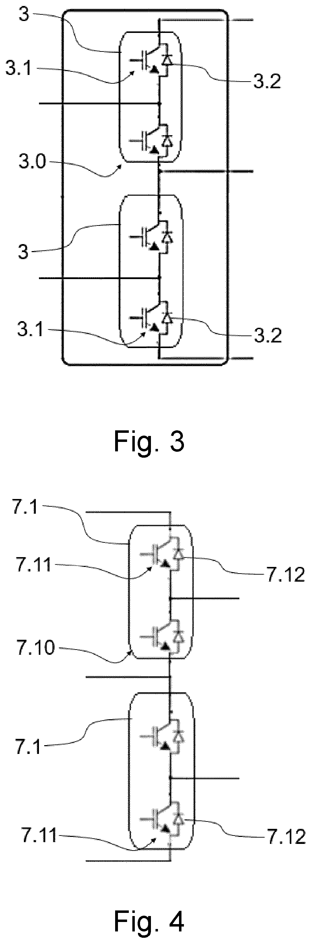

The DC - DC converter 3 comprises at least one converter branch 3.0 with a plurality of controllable switches 3.1, and preferably comprises a respective diode 3.2 connected in antiparallel to each controllable switch 3.1 (see figure 3). The presence of the diodes 3.2 makes it possible to keep the controllable switches 3.1 off during the connection of the power supply system 1 to the catenary 100 for example.

In a conventional power supply system, during connection to a catenary it is necessary to use a pre-charge system consisting of a contactor and a resistor whose functions are to limit the current peak, the voltage being prevented from rising above the catenary voltage and oscillations being also prevented. Since the proposed power supply system 1 is designed to operate at voltages higher than the voltage of the catenary 100 and thanks to the diodes 3.2 which do not allow oscillations to occur by preventing current reversal, it is possible to eliminate the elements of the pre-charge circuit and avoid the need to incorporate additional pre-charge components.

Other configurations for the DC-DC converter 3 not shown in the figures would also be possible, such as any other type of boost topology for example.

The power supply system 1 comprises an isolation block 7 connected between the DC - DC converter 3 and the DC bus 4, said isolation block 7 comprising a transformer 7.0 for galvanically isolating said DC bus 4 from the catenary 100. A DC - DC converter 3, an isolation block 7, a DC bus 4 and a traction inverter 5 may form a power supply branch 10 of the power supply system 1 for supplying a traction motor M of the railway vehicle 200, the power supply branch 10 comprising a connection 9. The power supply system 1 may thus comprise as many power supply branches 10 as there are traction motors M comprised in the railway vehicle 200 comprising said power supply system 1, each power supply branch 10 being configured to power a respective traction motor M.

The power supply system 1 preferably comprises a battery 6 associated with each power supply branch 10, said battery 6 being connected to the corresponding DC bus 4; although in some embodiments the power supply system 1 could comprise at least one power supply branch without an associated battery 6 (but at least one power supply branch 10 with an associated battery 6).

Preferably, the isolation block 7 further comprises a first converter 7.1 connected to the DC - DC converter 3 and configured to convert a continuous electrical power output of the DC - DC converter 3 into a first alternating electrical power to feed the transformer 7.0 and said transformer 7.0 is connected to said first converter 7.1 and is configured to transform said first alternating electrical power into a second alternating electrical power.

Thanks to the DC voltage boost provided by the DC-DC converter 3, a higher and more stable DC voltage is obtained at the output of the DC-DC converter 3, from which the transformer 7.0 is fed through the first converter 7.1. Thanks to this higher DC voltage, modulation techniques can be applied to obtain high switching frequencies on the first converter 7.1 (e.g., soft modulation), allowing the use of a high frequency transformer 7.0 which is smaller in size than conventional transformers 7.0. This results in a considerable reduction in the size and weight of the power supply system 1, and an improvement in the efficiency of the power supply system 1.

The first converter 7.1 comprises at least one converter branch 7.10 with a plurality of controllable switches 7.11 as depicted in figure 4, said controllable switches 7.11 being preferably high frequency IGBTs. Preferably each controllable switch 7.11 comprises a diode 7.12 connected in anti-parallel.

The isolation block 7 further comprises a second converter 7.2 which is connected between the transformer 7.0 and the DC bus 4 and which is configured to convert the second AC electrical power coming from the transformer 7.0 into a DC electrical power. The DC bus 4 is connected between the second converter 7.2 and the traction inverter 5. As with the first converter 7.1, modulation techniques can be applied to obtain high switching frequencies on the second converter 7.2 (e.g., soft modulation).

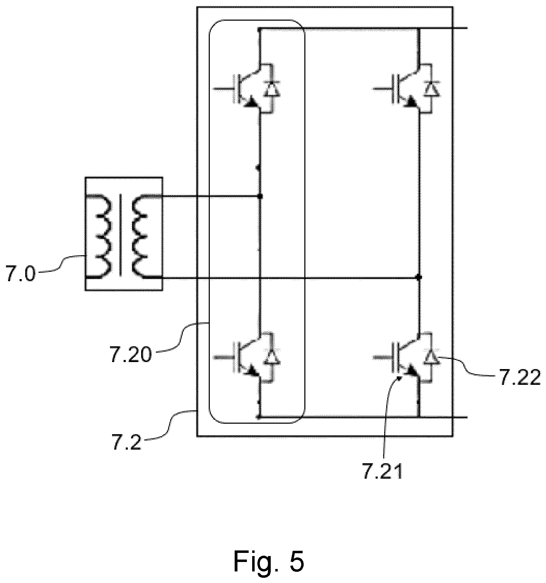

Preferably the second converter 7.2 comprises a full bridge configuration as depicted in figure 5, each with a plurality of controllable switches 7.21, said controllable switches 7.21 being preferably high frequency IGBTs. Preferably each controllable switch 7.21 comprises a diode 7.22 connected in anti-parallel. Other configurations of the second converter 7.2 not shown in the figures would also be possible, such as for example half-bridge or rectifier-doubler.

Preferably the first converter 7.1, the transformer 7.0 and the second converter 7.2 act as a series resonant converter, thus having a very high efficiency because they minimise switching losses of the controllable switches 7.11 and 7.21 and heat dissipation (mainly due to the modulation technique known as soft modulation).

## Claims

1. Power supply system for a railway vehicle, the power supply system (1) comprising a connection point (2) for being connected to a catenary (100); at least one DC bus (4) associated to the connection point (2); a traction inverter (5) connected to said DC bus (4) and configured to convert a DC electrical power from said DC bus (4) into AC three-phase power to supply a traction motor (M) of the railway vehicle (200); and a traction battery (6) connected to said DC bus (4), the connection point (2) is configured to connect the power supply system (1) to a DC catenary (100) which provides said power supply system (1) with a DC voltage, said power supply system (1) comprising a DC-DC converter (3) which is connected between the connection point (2) and the DC bus (4), and which is configured to, in use, boost the DC voltage coming from the catenary (100), **characterised in that** the catenary (100) is adapted to provide a DC voltage with a given maximum value in normal operating conditions, the DC-DC converter (3) being unidirectional and being configured to, in use, raise the DC voltage coming from the catenary (100) to a value equal to or above said given maximum value, the power supply system (1) comprising a control unit (8) configured to, in use, cause the DC-DC converter (3) to raise the DC voltage from the catenary (100) at all times.

2. Power supply system according to claim 1, comprising an isolation block (7) connected between the DC-DC converter (3) and the DC bus (4), said isolation block (7) comprising a transformer (7.0) for galvanically isolating said DC bus (4) from the catenary (100).

3. Power supply system according to claim 2, wherein the isolation block (7) comprises a first converter (7.1) connected to the DC-DC converter (3) and configured to convert a continuous electrical power output of the DC-DC converter (3) into a first alternating electrical power, the transformer (7.0) being connected to said first converter (7.1) and being configured to convert said first alternating electrical power into a second alternating electrical power, and said isolation block (7) comprising a second converter (7.2) connected between the transformer (7.0) and the traction inverter (5), and being configured to convert the second alternating electrical power into a continuous electrical power, the DC bus (4) being connected between said second converter (7.2) and said traction inverter (5).

4. Power supply system according to claim 3, wherein the first converter (7.1), the transformer (7.0) and the second converter (7.2) form a series resonant converter.

5. Power supply system according to claim 3 or 4, wherein the control unit (8) is configured to control the first converter (7.1) and the second converter (7.2) using a modulation technique known as soft modulation.

6. Power supply system according to any of claims 2 to 5, wherein the first converter (7.1) of the isolation block (7) comprises at least one converter branch (7.10) with a plurality of controllable switches (7.11) and the second converter (7.2) of said isolation block (7) comprises at least one converter branch (7.20) with a plurality of controllable switches (7.21), the controllable switches (7.11) of the first converter (7.1) and the controllable switches (7.21) of the second converter (7.2) being high frequency IGBTs.

7. Power supply system according to any of claims 2 to 6, wherein a DC-DC converter (3), an isolation block (7), a DC bus (4) and an inverter (5) form a power supply branch for supplying a traction motor (M) of the railway vehicle (200), the power supply system (1) comprising a power supply branch for each traction motor (M) of said railway vehicle (200) and a battery (6) connected to at least one of said power supply branches (10).

8. Power supply system according to any of claims 2 to 7, wherein a DC-DC converter (3), an isolation block (7), a DC bus (4) and a traction inverter (5) form a power supply branch (10) for supplying a traction motor (M) of the railway vehicle (200), the power supply system (1) comprising a plurality of power supply branches (10) and at least one battery (6) connected to the DC bus (4) of at least one of said power supply branches (10).

9. Power supply system according to claim 8, wherein the power supply system (1) comprises a battery (6) associated to each power supply branch (10), wherein a battery (6) is connected to the respective DC bus (4) of the power supply branch (10) to which it is associated.

10. Power supply system according to any of claims 1 to 9, wherein the DC - DC converter (3) comprises at least one converter branch (3.0) with a plurality of controllable switches (3.1) and with a respective diode (3.2) connected in anti-parallel to each controllable switch (3.1).

11. Power supply system according to claim 10, wherein the controllable switches (3.1) are high frequency IGBTs.

12. Railway vehicle comprising at least one traction motor (M), **characterised in that** the railway vehicle comprises a power supply system (1) according to any of the preceding claims configured to electrically supply said traction motor (M).

## Patentansprüche

1. Stromversorgungssystem für ein Schienenfahrzeug, wobei das Stromversorgungssystem (1) einen Anschlusspunkt (2) zum Anschluss an eine Oberleitung (100); mindestens einen Gleichstrom-Bus (4), der dem Anschlusspunkt (2) zugeordnet ist; einen Traktionswechselrichter (5), der mit dem Gleichstrom-Bus (4) verbunden und dazu konfiguriert ist, elektrischen Gleichstrom vom Gleichstrom-Bus (4) in dreiphasigen Wechselstrom umzuwandeln, um einen Traktionsmotor (M) des Schienenfahrzeugs (200) zu versorgen; und eine an den Gleichstrombus (4) angeschlossene Traktionsbatterie (6) umfasst, wobei der Anschlusspunkt (2) dazu konfiguriert ist, das Stromversorgungssystem (1) an eine Gleichstrom-Oberleitung (100) anzuschließen, die dem Stromversorgungssystem (1) eine Gleichspannung bereitstellt, wobei das Stromversorgungssystem (1) einen Gleichspannungswandler (3) umfasst, der zwischen dem Anschlusspunkt (2) und dem Gleichstrombus (4) angeschlossen ist und der dazu konfiguriert ist, im Betrieb die von der Oberleitung (100) kommende Gleichspannung zu erhöhen, **dadurch gekennzeichnet, dass** die Oberleitung (100) angepasst ist, um unter normalen Betriebsbedingungen eine Gleichspannung mit einem gegebenen Maximalwert bereitzustellen, wobei der Gleichspannungswandler (3) unidirektional ist und dazu konfiguriert ist, im Betrieb die von der Oberleitung (100) kommende Gleichspannung auf einen Wert anzuheben, der dem gegebenen Maximalwert gleich ist oder darüber liegt, wobei das Stromversorgungssystem (1) eine Steuereinheit (8) umfasst, die dazu konfiguriert ist, im Betrieb den Gleichspannungswandler (3) zu veranlassen, die Gleichspannung von der Oberleitung (100) jederzeit anzuheben.

2. Stromversorgungssystem nach Anspruch 1, umfassend einen Isolationsblock (7), der zwischen dem Gleichspannungswandler (3) und dem Gleichstrombus (4) angeschlossen ist, wobei der Isolationsblock (7) einen Transformator (7.0) zur galvanischen Isolierung des Gleichstrombusses (4) von der Oberleitung (100) umfasst.

3. Stromversorgungssystem nach Anspruch 2, wobei der Isolationsblock (7) einen ersten Wandler (7.1) umfasst, der mit dem Gleichspannungswandler (3) verbunden und dazu konfiguriert ist, einen kontinuierlichen elektrischen Ausgangsstrom des Gleichspannungswandlers (3) in einen ersten Wechselstrom umzuwandeln, wobei der Transformator (7.0) an den ersten Wandler (7.1) angeschlossen ist und dazu konfiguriert ist, den ersten Wechselstrom in einen zweiten Wechselstrom umzuwandeln, und wobei der Isolationsblock (7) einen zweiten Wandler (7.2) umfasst, der zwischen dem Transformator (7.0) und dem Traktionswechselrichter (5) angeschlossen ist, und dazu konfiguriert ist, den zweiten Wechselstrom in einen Gleichstrom umzuwandeln, wobei der Gleichstrombus (4) zwischen dem zweiten Wandler (7.2) und dem Traktionswechselrichter (5) angeschlossen ist.

4. Stromversorgungssystem nach Anspruch 3, wobei der erste Wandler (7.1), der Transformator (7.0) und der zweite Wandler (7.2) einen Serienresonanzwandler bilden.

5. Stromversorgungssystem nach Anspruch 3 oder 4, wobei die Steuereinheit (8) dazu konfiguriert ist, den ersten Wandler (7.1) und den zweiten Wandler (7.2) unter Verwendung einer als Soft-Modulation bekannten Modulationstechnik zu steuern.

6. Stromversorgungssystem nach einem der Ansprüche 2 bis 5, wobei der erste Wandler (7.1) des Isolationsblocks (7) mindestens einen Wandlerzweig (7.10) mit einer Vielzahl von steuerbaren Schaltern (7.11) umfasst und der zweite Wandler (7.2) des Isolationsblocks (7) mindestens einen Wandlerzweig (7.20) mit einer Vielzahl von steuerbaren Schaltern (7.21) umfasst, wobei die steuerbaren Schalter (7.11) des ersten Wandlers (7.1) und die steuerbaren Schalter (7.21) des zweiten Wandlers (7.2) Hochfrequenz-IGBTs sind.

7. Stromversorgungssystem nach einem der Ansprüche 2 bis 6, wobei ein Gleichspannungswandler (3), ein Isolationsblock (7), ein Gleichstrombus (4) und ein Wechselrichter (5) einen Stromversorgungszweig zum Versorgen eines Traktionsmotors (M) des Schienenfahrzeugs (200) bilden, wobei das Stromversorgungssystem (1) einen Stromversorgungszweig für jeden Traktionsmotor (M) des Schienenfahrzeugs (200) und eine Batterie (6) umfasst, die an mindestens einen der Stromversorgungszweige (10) angeschlossen ist.

8. Stromversorgungssystem nach einem der Ansprüche 2 bis 7, wobei ein Gleichspannungswandler (3), ein Isolationsblock (7), ein Gleichstrombus (4) und ein Traktionswechselrichter (5) einen Stromversorgungszweig (10) zum Versorgen eines Traktionsmotors (M) des Schienenfahrzeugs (200) bilden, wobei das Stromversorgungssystem (1) eine Vielzahl von Stromversorgungszweigen (10) und mindestens eine Batterie (6) umfasst, die an den Gleichstrombus (4) mindestens eines der Stromversorgungszweige (10) angeschlossen ist.

9. Stromversorgungssystem nach Anspruch 8, wobei das Stromversorgungssystem (1) eine jedem Stromversorgungszweig (10) zugeordnete Batterie (6) umfasst, wobei eine Batterie (6) an den jeweiligen Gleichstrombus (4) des Stromversorgungszweigs (10) angeschlossen ist, dem sie zugeordnet ist.

10. Stromversorgungssystem nach einem der Ansprüche 1 bis 9, wobei der Gleichspannungswandler (3) mindestens einen Wandlerzweig (3.0) mit einer Vielzahl von steuerbaren Schaltern (3.1) und mit einer jeweiligen Diode (3.2) umfasst, die antiparallel zu jedem steuerbaren Schalter (3.1) geschaltet ist.

11. Stromversorgungssystem nach Anspruch 10, wobei die steuerbaren Schalter (3.1) Hochfrequenz-IGBTs sind.

12. Schienenfahrzeug, umfassend mindestens einen Traktionsmotor (M), **dadurch gekennzeichnet, dass** das Schienenfahrzeug ein Stromversorgungssystem (1) nach einem der vorhergehenden Ansprüche umfasst, das dazu konfiguriert ist, den Traktionsmotor (M) mit Strom zu versorgen.

## Revendications

1. Système d'alimentation électrique pour un véhicule ferroviaire, le système d'alimentation électrique (1) comprenant un point de connexion (2) destiné à être connecté à une caténaire (100) ; au moins un bus continu (4) associé au point de connexion (2) ; un onduleur de traction (5) connecté audit bus continu (4) et configuré pour convertir une puissance électrique continue provenant dudit bus continu (4) en une puissance triphasée alternative afin d'alimenter un moteur de traction (M) du véhicule ferroviaire (200) ; et une batterie de traction (6) connectée audit bus continu (4), le point de connexion (2) étant configuré pour connecter le système d'alimentation électrique (1) à une caténaire à courant continu (100) qui fournit audit système d'alimentation électrique (1) une tension continue, ledit système d'alimentation électrique (1) comprenant un convertisseur CC-CC (3) qui est connecté entre le point de connexion (2) et le bus continu (4), et qui est configuré pour, en fonctionnement, élever la tension continue provenant de la caténaire (100), **caractérisé en ce que** la caténaire (100) est adaptée pour fournir une tension continue présentant une valeur maximale donnée dans des conditions normales de fonctionnement, le convertisseur CC-CC (3) étant unidirectionnel et étant configuré pour, en fonctionnement, élever la tension continue provenant de la caténaire (100) à une valeur égale ou supérieure à ladite valeur maximale donnée, le système d'alimentation électrique (1) comprenant une unité de commande (8) configurée pour, en fonctionnement, amener le convertisseur CC-CC (3) à élever la tension continue provenant de la caténaire (100) en permanence.

2. Système d'alimentation électrique selon la revendication 1, comprenant un bloc d'isolation (7) connecté entre le convertisseur CC-CC (3) et le bus continu (4), ledit bloc d'isolation (7) comprenant un transformateur (7.0) destiné à isoler galvaniquement ledit bus continu (4) de la caténaire (100).

3. Système d'alimentation électrique selon la revendication 2, dans lequel le bloc d'isolation (7) comprend un premier convertisseur (7.1) connecté au convertisseur CC-CC (3) et configuré pour convertir une puissance électrique continue de sortie du convertisseur CC-CC (3) en une première puissance électrique alternative, le transformateur (7.0) étant connecté audit premier convertisseur (7.1) et étant configuré pour convertir ladite première puissance électrique alternative en une seconde puissance électrique alternative, et ledit bloc d'isolation (7) comprenant un second convertisseur (7.2) connecté entre le transformateur (7.0) et l'onduleur de traction (5), et étant configuré pour convertir la seconde puissance électrique alternative en une puissance électrique continue, le bus continu (4) étant connecté entre ledit second convertisseur (7.2) et ledit onduleur de traction (5).

4. Système d'alimentation électrique selon la revendication 3, dans lequel le premier convertisseur (7.1), le transformateur (7.0) et le second convertisseur (7.2) forment un convertisseur résonant série.

5. Système d'alimentation électrique selon la revendication 3 ou 4, dans lequel l'unité de commande (8) est configurée pour commander le premier convertisseur (7.1) et le second convertisseur (7.2) au moyen d'une technique de modulation connue sous le nom de modulation douce.

6. Système d'alimentation électrique selon l'une quelconque des revendications 2 à 5, dans lequel le premier convertisseur (7.1) du bloc d'isolation (7) comprend au moins une branche de convertisseur (7.10) comportant une pluralité de commutateurs commandables (7.11) et le second convertisseur (7.2) dudit bloc d'isolation (7) comprend au moins une branche de convertisseur (7.20) comportant une pluralité de commutateurs commandables (7.21), les commutateurs commandables (7.11) du premier convertisseur (7.1) et les commutateurs commandables (7.21) du second convertisseur (7.2) étant des IGBT haute fréquence.

7. Système d'alimentation électrique selon l'une quelconque des revendications 2 à 6, dans lequel un convertisseur CC-CC (3), un bloc d'isolation (7), un bus continu (4) et un onduleur (5) forment une branche d'alimentation électrique destinée à alimenter un moteur de traction (M) du véhicule ferroviaire (200), le système d'alimentation électrique (1) comprenant une branche d'alimentation électrique pour chaque moteur de traction (M) dudit véhicule ferroviaire (200) et une batterie (6) connectée à au moins une desdites branches d'alimentation électrique (10).

8. Système d'alimentation électrique selon l'une quelconque des revendications 2 à 7, dans lequel un convertisseur CC-CC (3), un bloc d'isolation (7), un bus continu (4) et un onduleur de traction (5) forment une branche d'alimentation électrique (10) destinée à alimenter un moteur de traction (M) du véhicule ferroviaire (200), le système d'alimentation électrique (1) comprenant une pluralité de branches d'alimentation électrique (10) et au moins une batterie (6) connectée au bus continu (4) d'au moins une desdites branches d'alimentation électrique (10).

9. Système d'alimentation électrique selon la revendication 8, dans lequel le système d'alimentation électrique (1) comprend une batterie (6) associée à chaque branche d'alimentation électrique (10), une batterie (6) étant connectée au bus continu respectif (4) de la branche d'alimentation électrique (10) à laquelle elle est associée.

10. Système d'alimentation électrique selon l'une quelconque des revendications 1 à 9, dans lequel le convertisseur CC-CC (3) comprend au moins une branche de convertisseur (3.0) comportant une pluralité de commutateurs commandables (3.1) et une diode respective (3.2) connectée en antiparallèle à chaque commutateur commandable (3.1).

11. Système d'alimentation électrique selon la revendication 10, dans lequel les commutateurs commandables (3.1) sont des IGBT haute fréquence.

12. Véhicule ferroviaire comprenant au moins un moteur de traction (M), **caractérisé en ce que** le véhicule ferroviaire comprend un système d'alimentation électrique (1) selon l'une quelconque des revendications précédentes, configuré pour alimenter électriquement ledit moteur de traction (M).
